# EUROPEAN PATENT SPECIFICATION

(11) **EP 0 735 258 B1**
(45) Date of publication and mention of the grant of the patent: **11.07.2001**
(21) Application number: 96105199.2
(22) Date of filing: 01.04.1996
(51) Int. Cl.: F02D 41/14, F02D 43/00, F02D 37/02

(54) **An internal combustion engine**
Brennkraftmaschine
Moteur à combustion interne

(30) Priority: 31.03.1995 JP 10015195
(43) Date of publication of application: 02.10.1996
(73) Proprietor: YAMAHA HATSUDOKI KABUSHIKI KAISHA, Iwata-shi Shizuoka-ken, 438 (JP)
(72) Inventor: Motoyama, Yu, c/o Yamaha Hatsudoki K.K., Iwata-shi, Shizuoka-ken (JP); Moriya, Yoshikiko, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- GB-A- 2 155 994
- US-A- 4 827 880
- US-A- 5 215 068
- PATENT ABSTRACTS OF JAPAN vol. 014, no. 375 (M-1010), 14 August 1990 & JP 02 136504 A (AISIN SEIKI CO LTD), 25 May 1990,

## Description

This invention relates to an internal combustion engine comprising at least one cylinder slidingly receiving a reciprocable piston and having an intake passage opening into said cylinder via an intake port, and an exhaust passage opening into said cylinder via an exhaust port, an engine control means receiving signals from an operation condition detection device having at least one first exhaust gas pressure sensor associated to the exhaust passage and adapted to detect an exhaust gas pressure therein and to a method of controlling an internal combustion engine comprising at least one cylinder slidingly receiving a reciprocable piston and having an intake passage opening into said cylinder via an intake port and an exhaust passage opening into said cylinder via an exhaust port, an engine control means connected with an operation condition detection device having at least one first exhaust gas pressure sensor, comprising the steps of detecting an exhaust gas pressure, processing the detected exhaust gas pressure values and outputting a control signal for controlling said engine.

For improving engine performance, it has been practiced to detect exhaust gas pressure within the combustion chamber and, according to the detected signals, utilize reflected waves of the exhaust gas pulsation. In that case, especially in 2-cycle stroke engines, but also in 4-cycle stroke engines, in a high speed high load range, the arrival time of the reflected waves traveling toward the exhaust port of the exhaust passage which is open to the combustion chamber tends to be delayed. As a result, a sudden decrease in the engine output is experienced in the high speed high load range because of insufficient utilization of the reflected waves.

Therefore, an arrangement described below can be considered to restrict the decrease in the output in the high speed, high load range.

That is to say, the state of high speed high load of the engine is detected while the pressure in the combustion chamber is detected with a pressure detection sensor, and from these detected signals, ignition timing is delayed by a specified crank angle to delay the combustion of mixture gas.

When the combustion speed is thus delayed, temperature of the exhaust gas flowing from the combustion chamber to the exhaust passage rises and the sound velocity in the exhaust passage increases. Then the arrival time of the reflected waves to the exhaust port is advanced so that the reflected waves arrive in specified arrival time, the reflected waves are effectively utilized, and the engine output can be increased.

Therefore, this arrangement does not control the exhaust gas pulsation by sensing the pressure in the combustion chamber.

Further, while only one detection is made at a specified crank angle with the pressure detection sensor for every rotation of the crank, the pressure in the combustion chamber changes from moment to moment before and after the above-mentioned crank angle. Therefore, the detected value from only one detection at the specified crank angle is likely to produce a large error. When the ignition timing is controlled according such detected signals, the reflected waves of the exhaust gas pulsation cannot be utilized effectively because of such an error. As a result, the engine performance cannot be improved sufficiently.

Since the pressure detection sensor for use in the prior art arrangement is the one which directly detects the pressure in the combustion chamber, the sensor is directly subjected to a large variation in pressure and to high temperatures.

From the viewpoint of durability, high quality is required of the above pressure detection sensor to stand the harsh conditions described above for an extended period of time. This causes further problems that the pressure detection sensor has to be fabricated in a complicated shape and increases the cost.

This problem has been solved by an internal combustion engine as well as a method of controlling an internal combustion engine as indicated above, which are disclosed in US-A-5,215,068, GB-A-2 155 994 or US-A-4,827,880, respectively. According to all of these documents, an exhaust pressure sensor in an exhaust passage is used as an input to an engine controller in usual internal combustion engines.

Moreover, US-A-4,827,880 proposes feedback controlling the exhaust pressure which deviates the use of a usual Pl-controller. However, according to this document, the pressure detection means only detects a pressure peak within the exhaust pipe, so that the engine performance is not always effective and that the possibility of errors is high.

Accordingly, it is an objective of the present invention to provide an improved internal combustion engine as indicated above which is capable to always control the exhaust gas pulsation with high reliability and to ensure high engine performance.

According to the invention, this objective is solved for an internal combustion engine as indicated above in that said engine control means is adapted to sum up exhaust gas pressure values detected, at least for a period of time from the time when the intake port or scavenging port, respectively, is closed to the time when the exhaust port is closed.

According to one embodiment of the invention, the exhaust gas pressure sensor is located close to said exhaust port.

In order to enhance the control of the exhaust gas pulsation, it is advantageous to provide another exhaust gas pressure sensor downstream of said one exhaust gas pressure sensor to be able to detect the exhaust gas pressure propagation.

According to another embodiment of the invention, an exhaust gas temperature sensor is provided within the exhaust passage downsteam of said one exhaust gas pressure sensor.

The engine output may be controlled by an engine output adjustment means being feedback controlled by a control means, said engine output adjustment means may be an ignition timing changing means, a fuel supply adjustment device, a throttle opening adjustment device or a variable harmonic length device adapted for changing the length of an exhaust pipe.

According to a further embodiment of the invention, the engine control means is adapted to calculate the velocity of reflected waves of exhaust gas by using detected signals of said first and second pressure sensors.

It is a further objective of the present invention to provide an improved method of controlling an internal combustion engine as indicated above which always facilitates the control of an exhaust gas pulsation and the enhancement of high engine performance.

According to the invention, this objective is solved for a method of controlling an internal combustion engine as indicated above in that said detected exhaust gas pressure values are summed up at least for a time period from the time when the intake port or scavenging port respectively, is closed to the time when the exhaust port is closed.

According to an embodiment of the invention, there is provided a control means which is a part of said engine control means performing feedback control of an engine output adjustment means so that the summed up values of said exhaust gas pressures calculated by said control means becomes as large as possible.

According to still a further embodiment of the invention, said engine output adjustment means is an ignition timing changing device being controlled by measuring a throttle opening and an engine speed, whereby said measure values being compared with predetermined values. When said comparison is negative a control value is determined from that throttle opening and engine speed, and when said compression is positive a sum value is calculated from said pressure values and then a control value is determined from said throttle opening and engine speed to finally control said ignition timing changing means.

This invention is not only applicable to 2-cycle stoke internal combustion engines but also to 4-cycle stroke internal combustion engines.

Further, this invention not only facilitates a reliable control of exhaust gas pulsation, but also a high engine performance by detecting the maximum exhaust gas pressure within the exhaust pipe.

Other preferred embodiments of the present invention are laid down in further dependent claims.

According to the invention, there are provided, a pressure sensor for detecting exhaust gas pressure flowing through an exhaust passage, the pressure sensor being disposed in the vicinity of an exhaust port of the exhaust passage which is open to a combustion chamber, and a control means which sums up values of the exhaust gas pressure, at least for a period of time from the time when the intake or scavenging port, respectively, is closed to the time when the exhaust port is closed, for example, by a piston in the case of a 2-cycle stroke engine moving from the bottom dead center toward the top dead center, by inputting signals detected with the pressure detection sensor.

With the sum value obtained with the above controller, in contrast to the single value detected at a specified crank angle with the conventional pressure detection arrangement in which only one detection is made for every rotation of the crank, having a high possibility of errors, a more accurate average exhaust gas pressure value is obtained for a crank angle range extending before and after the specified crank angle.

With the sum value described above, for instance in relation to the piston stroke volume in the engine, a more accurate mean effective pressure can be calculated.

Another feature is that since the pressure detection sensor detects the pressure of the exhaust gas flowing through the exhaust passage, in comparison with the conventional arrangement in which the pressure in the combustion chamber is directly detected, burden of pressure and heat from the exhaust gas on the pressure detection sensor is smaller, and accordingly the pressure detection sensor can be fabricated more easily at a lower cost.

In the above case, it may also be arranged that the control means performs feedback control of the output adjustment means so that the sum value calculated by the operation state detection device for the 2-cycle stroke and 4-cycle stroke engine becomes as great as possible.

Thus, by the sum value of the pressure values of the exhaust gas, the average pressure value P in the crank angle range extending before and after the specified crank angle is detected, the pulsation state of the exhaust gas is detected more accurately, the sum value is increased, the mean effective pressure which can be calculated from the sum value is increased, output state of the engine is controlled more effectively, and the reflected waves are utilized more effectively.

As a result, the engine performance is improved more effectively.

The engine output adjustment means may be an ignition timing changing means which changes the ignition timing.

Accordingly, the reflected waves of the exhaust gas pulsation is utilized more effectively and the engine performance is improved more effectively.

In the following, the present invention is explained in greater detail with respect to several embodiments thereof in conjunction with the accompanying drawings, wherein:
Figure 1 is an overall side view of a motorcycle;
Figure 2 is a partially enlarged cross-section of figure 1;
Figure 3 is a diagram of relationship between the crank angle and opening and closing of the exhaust and scavenging ports;
Figure 4 is a graph of relationship between the crank angle and the reflected wave pressures;
Figure 5 is a graph of relationship between the sum value of the exhaust gas pressure values and the mean effective pressure;
Figure 6 is a flow chart of the controller;
Figure 7 is a flow chart of the controller; and
Figure 8 is a map of relationship between the engine operation state and the control values.

Although in the following, embodiments according to the invention will be described with respect to a 2-cycle stroke internal combustion engine, this invention is of course applicable to 4-cycle stroke internal combustion engines.

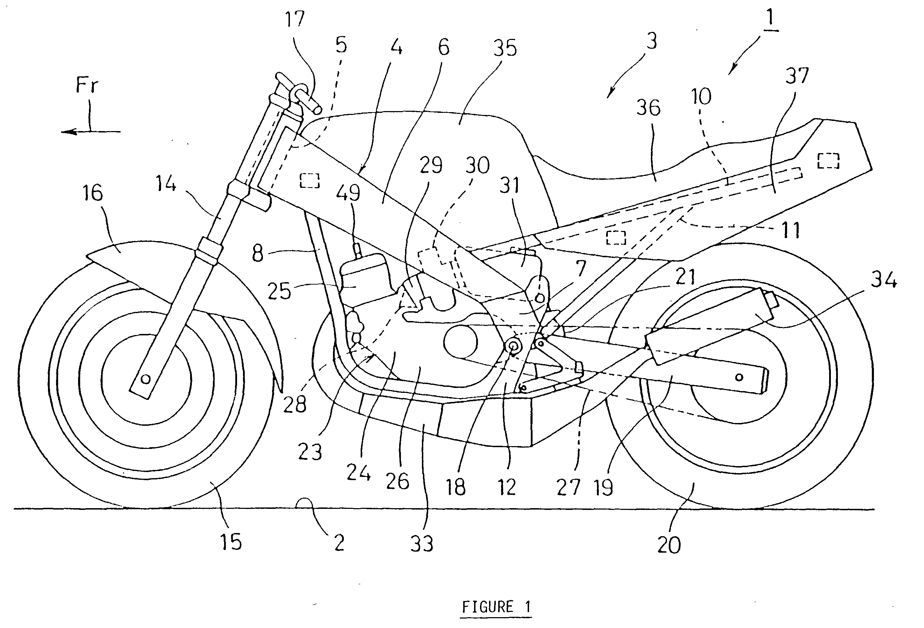

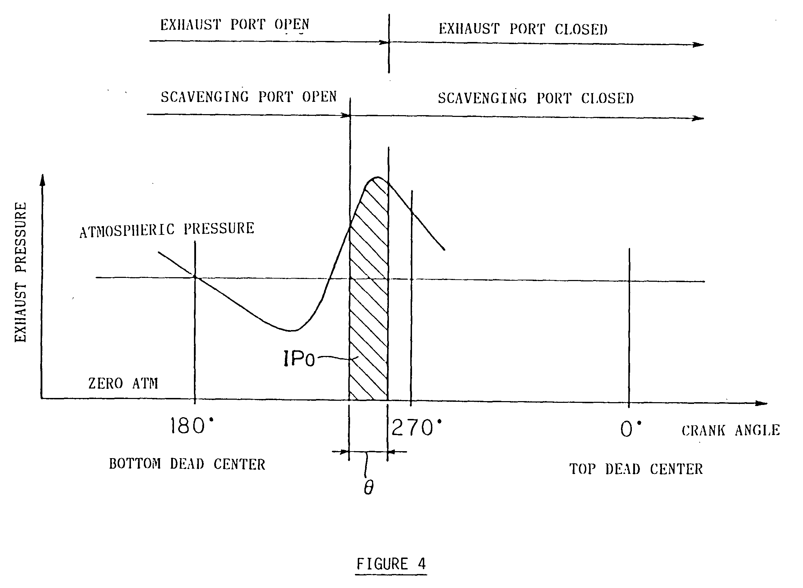

In FIGs. 1 and 4, an upstream side sensor (pressure detection sensor) 64 is provided for detecting the pressure value P of the exhaust gas 62 flowing through the exhaust passage 54 in the vicinity of the exhaust port 54a of the exhaust passage 54 which is open to the combustion chamber 48 , and a controller 68 is provided for calculating the sum of values of the pressure P detected with the upstream side sensor (pressure detection sensor) 64 at least for a period of time from the time when a scavenging port 52a is closed to the time when the exhaust port 54a is closed by a piston 45 moving from the bottom dead center toward the top dead center, by inputting signals detected with the upstream side sensor (pressure detection sensor) 64 .

In contrast to the conventional arrangement in which the upstream side sensor (pressure detection sensor) 64 performs only one detection for each rotation of an engine 23 at a specified crank angle and errors in the detected values are likely to occur, with the sum value IPₒ calculated with the controller 68 , a more accurate average pressure value of the exhaust gas 62 can be detected for a range extending before and after the specified crank angle.

Another feature is that since the upstream side sensor (pressure detection sensor) 64 detects the pressure value P of the exhaust gas 62 flowing through the exhaust passage 54 , in comparison with the conventional arrangement in which the pressure in the combustion chamber 48 is directly detected, burden of pressure and heat from the exhaust gas 62 on the upstream side sensor (pressure detection sensor) 64 is smaller.

In the above case, it may be arranged that the controller 68 of the operating state detection device for the 2-cycle stroke engine 23 performs feedback control of the engine output adjustment means 67 so that the sum value IPₒ calculated with the controller 68 becomes as great as possible.

In this way, the average pressure value of the exhaust gas 62 for a range extending before and after the specified crank angle is detected, the pulsation state of the exhaust gas 62 is detected, the sum value IPₒ is increased, a mean effective pressure Pₘ which can be calculated from the sum value IPₒ increases, control of the output state of the engine 23 is made more effective, and the reflected waves of the exhaust gas pulsation are utilized more effectively.

Alternatively, the engine 23 ignition timing changing means (output adjustment means) may be an ignition timing changing device 67 .

With such an arrangement, the arrival timing of the reflected waves of the exhaust gas pulsation at the exhaust port 54a of the exhaust passage 54 can be controlled more directly.

### Embodiment

An embodiment of this invention will be described in reference to the appended drawings.

FIG. 1 shows a motorcycle 1 as an example of a riding type vehicle with the arrow (Fr) denoting its advancing direction. As used herein, the terms right and left are in the sense with respect to the width of the vehicle. The road surface on which the motorcycle 1 can run is shown as 2.

A chassis 3 of the motorcycle 1 has a chassis frame 4 . The chassis frame 4 has a head pipe 5 from which extend paired right and left main frames 6 obliquely back downward. From the extended ends of the main frames 6 further extend seat pillar tubes 7 . From the front under sides of the main frames 6 extend down tubes 8 obliquely back downward. The extended ends of the down tubes 8 and the extended ends of the seat pillar tubes 7 are joined together.

From the rear parts of the main frames 6 extend seat rails 10 which are supported by paired right and left back stays 11 on the seat pillar tubes 7 . The area where the back stays 11 and the seat pillar tubes 7 are joined together constitutes a rear arm bracket 12 .

The head pipe 5 supports a front fork 14 to be freely steered. At the lower end of the front fork 14 is pivoted a front wheel 15 . A front fender 16 is secured at a vertically middle point on the front fork 14 to cover the front wheel 15 . At the top end of the front fork 14 are attached handle bars 17.

Rear arms 19 are pivoted for vertical swing by a pivot shaft 18 on the bracket 12 . At the swinging ends of the rear arms 19 is pivoted a rear wheel 20 . Dampers 21 are interposed between the seat rails 10 and the rear arms 19 .

In a space surrounded by the main frames 6 , seat pillar tubes 7 , and down tubes 8 , or within the chassis frame 4 , is installed an internal combustion engine 23 . The engine 23 is of the 2-cycle stroke type comprising a crankcase 24 , and a cylinder 25 projecting obliquely up forward, and is detachably supported on the chassis frame 4 by means of tightening means. A power transmission device 26 is connected to the rear surface of the crankcase 24 . The rear wheel 20 is connected through a chain transmission mechanism 27 to the output side of the power transmission device 26.

Behind the cylinder 25 are arranged a reed valve 28 , an intake pipe 29 , a carburettor 30 , and an air cleaner 31 . The carburettor 30 is provided with a throttle valve. To the front surface of the cylinder 25 is connected one end of an exhaust pipe 33 . The other end side of the exhaust pipe 33 extends rearward near and under the down tube 8 and its rear end is connected to a silencer 34 .

A fuel tank 35 is supported on the main frames 6 from which fuel is supplied to the carburettor 30 . A seat 36 is supported on the seat rails 10 . Side covers 37 are provided to cover both sides of the rear part of the chassis 3 .

As the engine 23 drives the rear wheel 20 through the power transmission device 26 and the chain transmission mechanism 27 , the motorcycle 1 is driven forward on the road 2 .

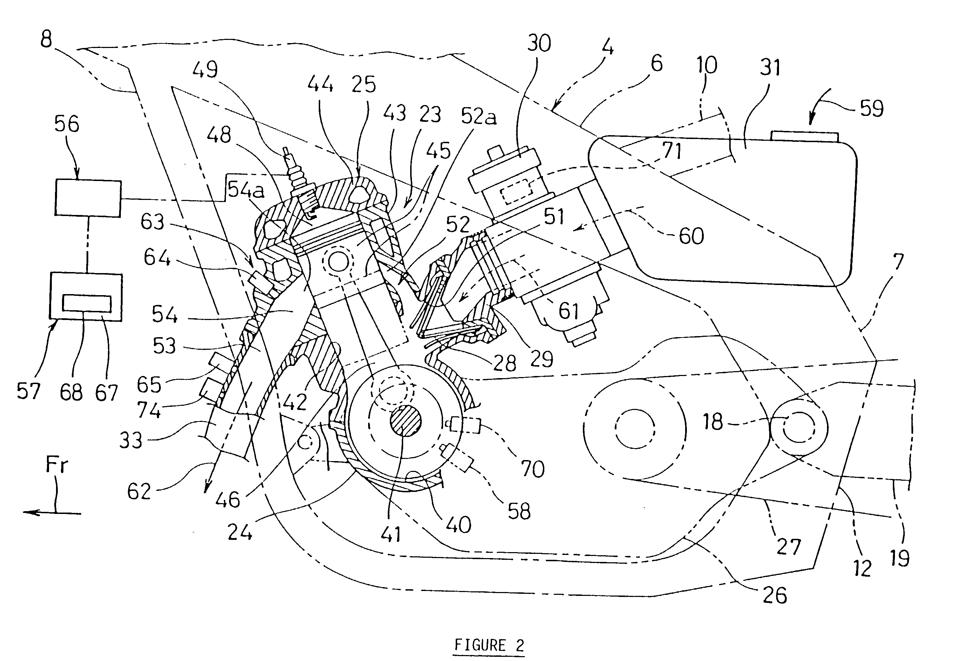

As shown in FIG. 2, a crankshaft 41 is housed and supported in a crank chamber 40 in the crankcase 24 of the engine 23 so as to be freely rotatable about its axis.

The cylinder 25 of the engine 23 has a cylinder body 43 having a cylinder bore 42 with its axis generally vertical, and a cylinder head 44 placed on the projecting end of the cylinder body 43 . A piston 45 is installed in the cylinder bore 42 for free vertical sliding and connected to the crankshaft 42 through a connecting rod 46 .

When the piston 45 comes near the cylinder head 44 to some extent, the space in the cylinder bore 42 surrounded by the cylinder head 44 and the piston 45 becomes a combustion chamber 48 . The cylinder head 44 is provided with an spark plug 49 and a discharge portion of the spark plug 49 faces the combustion chamber 48 .

In the rear upper part of the crankcase 24 is formed an intake port 51 communicating to the reed valve 28 . In the cylinder body 43 around the cylinder bore 42 is formed a scavenging passage 52 for making communication between the crank chamber 40 and the combustion chamber 48 . Part of the scavenging passage 52 which is open to the combustion chamber 48 is the scavenging port 52a. An exhaust passage 54 is provided at the front part of the cylinder body 43 to make communication between the combustion chamber 48 and the exhaust passage 53 in the exhaust pipe 33. Part of the exhaust passage 54 which is open to the combustion chamber 48 is the exhaust port 54a .

The spark plug 49 is electrically connected (hereinafter simply referred to as connected) to an electronic ignition circuit 56 which is in turn connected to an electronic engine controller 57. A crank angle detection sensor 58 is also provided for detecting the crank angle of the crankshaft 41 and also connected to the electronic engine controller 57.

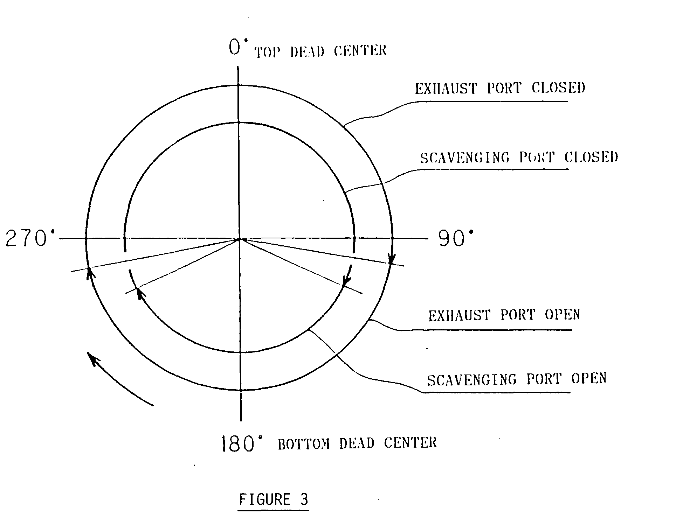

In FIGs 2 and 3, while the engine 23 is in operation and the piston 45 moves from the bottom dead center on the crankshaft 41 side (the position shown with phantom lines in FIG. 1 or the 180° position in FIG. 3) toward the combustion chamber 48 (between 180° and 270° in FIG. 3), first the scavenging port 52a is closed by the piston 45 and then the exhaust port 54a is closed. While the piston 45 moves toward the combustion chamber 48 , the pressure in crank chamber 40 becomes negative so that external air 59 is introduced as intake air 60 through the air cleaner 31 into the carburettor 30 .

To the intake air 60 is supplied fuel by the carburettor 30 to produce mixture 61 which is drawn through the intake pipe 29 and the reed valve 28 into the crank chamber 40. This step is the "intake process."

When the piston 45 further moves toward the combustion chamber 48 after the scavenging port 52a and the exhaust port 54a are closed, the mixture 61 which has been drawn into the combustion chamber 48 is compressed. This step is the "compression process."

The spark producing portion of the spark plug 49 produces a spark in response to an output signal from the ignition circuit 56 controlled by the engine controller 57 at a desired crank angle or a desired ignition timing detected by the crank angle detection sensor 58 immediately before the piston reaches the top dead center (the position shown with solid lines in FIG. 2 or 0° position in FIG. 3).

By the movement of the piston 45 toward the crank chamber 40 , the mixture 61 which has been drawn into the crank chamber 40 is preliminarily compressed. At this time, the reed valve 28 is closed by the pressure in the crank chamber 40 .

During the movement of the piston 45 toward the crank chamber 40 (between 90° and 180° in FIG. 3), first the exhaust port 54a is opened. Then, burnt gas of the mixture 61 as the exhaust gas 62 is discharged from the combustion chamber 48 through the exhaust port 54a and the exhaust passage 54 . This step is the "exhaust process." The exhaust gas 62 is discharged outside through the exhaust passage 53 in the exhaust pipe 33 .

When the piston 45 moves toward the crank chamber 40 and the exhaust port 54a is opened as described above, next the scavenging port 52a is opened. Then, the mixture 61 which has been compressed as described above, is forced through the scavenging passage 52 into the combustion chamber 48 and pushes out part of the burnt gas remaining in the combustion chamber 48 to the exhaust passage 54 while filling the combustion chamber 48 with the mixture 61 . This step is the "scavenging process." After that, the piston 45 moves toward the bottom dead center.

From the state described above, the piston 45 moves again toward the combustion chamber 48 and thereafter the steps described above are repeated to rotate the crankshaft 41 . Through the rotation of the crankshaft 41 the engine 23 outputs its power which is transmitted through the power transmission device 26 and the chain transmission mechanism 27 to the rear wheel 20.

Fig. 2 shows a control means or an operation controller for the engine 23 for improving the engine performance by utilizing reflected waves of pulsation of the exhaust gas from the engine 23 .

The above controller is provided with a pressure detection sensor 63 comprising an upstream side sensor 64 located in the vicinity of the exhaust port 54a which is the upstream end of the exhaust passage 54 , and a downstream side sensor 65 located in the vicinity of the upstream side end of the exhaust passage 53 of the exhaust pipe 33 . The upstream side sensor 64 and the downstream side sensor 65 are apart from each other by a small distance in the longitudinal direction of the exhaust passage 53.

An ignition timing changing device 67 is provided as output adjustment means for the engine 23 , comprising the ignition circuit 56 , a controller 68 which constitutes part of the engine controller 57 , and the crank angle detection sensor 58. The controller 68 performs feedback control of the ignition timing changing device 67 based on the detected signals from the pressure detection sensor 63.

An engine speed sensor 70 is provided for detecting the speed N or the number of revolutions per unit time of the crankshaft 41 of the engine 23 and connected to the controller 68 of the engine controller 57. An exhaust temperature sensor 74 is also provided for detecting the temperature of the exhaust gas 62 flowing through the exhaust passages 53, 54.

Pressures of the exhaust gas are detected by the upstream side sensor 64 and the downstream side sensor 65 of the pressure detection sensor 63 and the detected signals are input to the controller 68 . Here, from the signals of the upstream side sensor 64 and the downstream side sensor 65 , determination is made whether the pressure of the exhaust gas 62 is (advancing pressure) in the same direction as that of the flow of the exhaust gas 62 or the pressure is that of the reflected waves (reverse pressure) traveling in the opposite direction of the flow of the exhaust gas 62 , and only the pressure of the reflected waves is detected by the upstream side sensor 64 .

Referring to FIGs. 3 and 4, values of the pressure P over the range Θ from the closure of the scavenging port 52a to the closure of the exhaust port 54a by the piston 45 moving from the bottom dead center toward the top dead center are input by means of the detected signals of the upstream side sensor 64 and summed up by the controller 38 and the sum value IPₒ (the hatched portion in FIG. 4) is output. Here, the upstream side sensor 64 and the controller (68) detect the pressure value P of the exhaust gas 62 as an example of the operating state of the engine 23 , and constitute an operating state detection device for the 2-cycle engine.

In the above case, the closure of the scavenging port 52a and the exhaust port 54a may mean any crank angle between start and finish of the closure, and the summing period may be at least a certain part of period Θ from the closure of the scavenging port 52a to the closure of the exhaust port 54a.

In contrast to the conventional arrangement in which the pressure sensor 54 performs only one detection for each rotation of the crank at a specified crank angle and errors in the detected values are likely to occur, with the sum value IPₒ calculated with the controller 68 , a more accurate average pressure value of the exhaust gas 62 can be detected for a range extending before and after the specified crank angle.

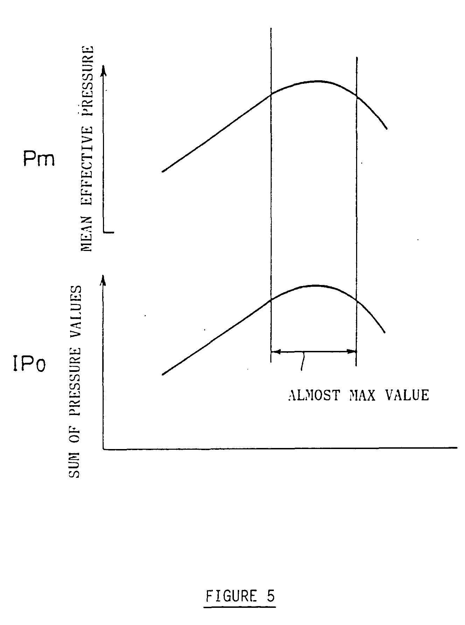

With the sum value IPₒ , for instance in relation to the piston stroke volume in the engine 23 , as shown in FIG. 5, a more accurate mean effective pressure Pₘ can be calculated.

Another feature is that since the upstream side sensor 64 detects the pressure value P of the exhaust gas 62 flowing through the exhaust passage 54 , in comparison with the conventional arrangement in which the pressure in the combustion chamber 48 is directly detected, burden of pressure and heat from the exhaust gas 62 on the upstream side sensor 64 is smaller.

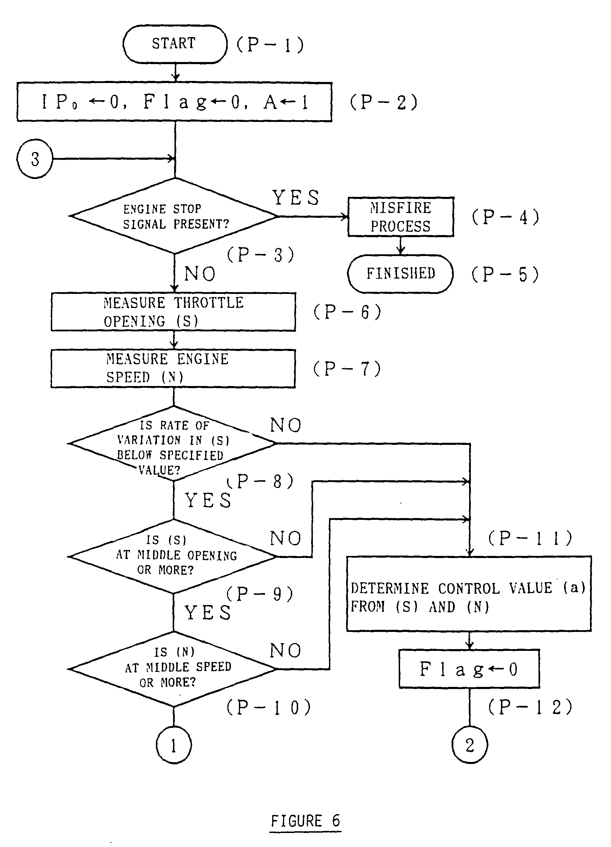

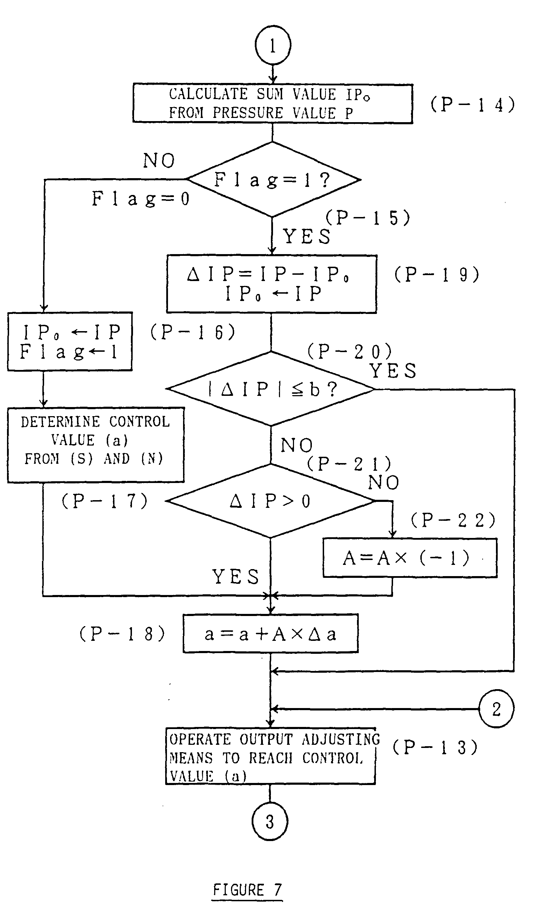

FIGs. 6 and 7 show flow charts for the controller 68 for the ignition timing changing device 67 for steps P-1 through P-22 . In the drawings, combinations of (1) and (1), (2) and (2), and (3) and (3) are respectively connected together.

Regarding the controller 68 , first in the step P-2 in FIG. 6, an initial setting is made. That is, the sum value IPₒ is made 0, the flag is made 0, and A is made 1 (A=1).

In the step P-3 , if the engine 23 is determined to be at rest on the basis of signals detected by the engine speed sensor 70 , etc., a misfire handling is carried out P-4 and the engine controller 57 is turned off P-5.

If the engine 23 is determined to be in operation in the step P-3 above, throttle opening S of the carburettor 30 is measured by the throttle opening sensor 71 and at the same time the engine speed N is measured by the engine speed sensor 70 .

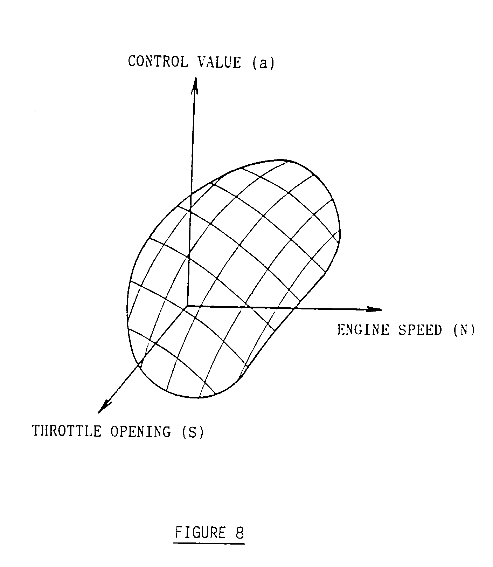

If the step P-8 determines that the rate of change in the throttle opening S is greater than a specified value, or that acceleration is rapid, and if the step P-9 determines that the throttle opening S is less than medium, and further the step P-10 determines that the engine speed N is less than medium, namely if the steps P-8 through P-10 determine that the engine 23 is in the state of low speed, low load range, the step P-11 determines from the map of FIG. 8 a control value a to be employed on the basis of the throttle opening S and the engine speed N.

Next, the flag is made 0 in the step P-12.

Next, in the step P-13 , the ignition timing changing device 67 as output adjustment means is actuated to produce the control value a .

If the ignition timing is advanced by the actuation of the ignition timing changing device 67 , the temperature of the exhaust gas S2 discharged from the combustion chamber 48 into the exhaust passage 54 lowers and the sound velocity in the exhaust passage 54 lowers, and the arrival time of the reflected waves of the exhaust gas 62 flowing from the downstream side of the exhaust passage 54 toward the exhaust port 54a is delayed. As a result, the reflected waves are made to arrive at specified arrival time and effectively utilized for the operation of the engine 23 at that time, and the engine performance is improved.

On the other hand, if the ignition timing is delayed by the actuation of the ignition timing changing device 67 , the temperature of the exhaust gas 62 discharged from the combustion chamber 48 into the exhaust passage 54 rises and the sound velocity in the exhaust passage 54 increases, and the arrival time of the reflected waves of the exhaust gas 62 flowing from the downstream side of the exhaust passage (54) toward the exhaust port 54a is advanced. As a result, the reflected waves are made to arrive at specified arrival time and effectively utilized for the operation of the engine 23 at that time, and the engine performance is improved.

After the step P-13 is carried out, the control returns to the step P-3 of FIG. 6 described above.

If the step P-8 determines that the rate of change in the throttle opening S is not greater than a specified value, or that acceleration is moderate, and if the step P-9 determines that the throttle opening S is not less than medium, and further the step P-10 determines that the engine speed N is not less than medium, namely if the steps P-8 through P-10 determine that the engine 23 is in the state of high speed, high load range, the step P-14 of FIG. 7 calculates the sum value IPₒ from the pressure values P of the exhaust gas 62 detected by the upstream side sensor 64 .

Next, the step P-15 determines whether the flag is 1. In this case, since the flag is 0 in the step P-2 , the step P-16 is carried out to make the flag 1.

Next, the step P-17 carries out the same program as in the step (p-11) to determine a control value (a). Next the step P-18 is carried out. In this case, since A is made 1 in the step P-2 , the control value a is increased by a small amount Δa in the step P-18 . The increased control value is used as a corrected control value a and the step P-13 is carried out.

In the above step P-15 , since the flag is made 1 in the step p-16 , the step P-19 is carried out. In the step P-19 , the difference between the previous IP and the current IPₒ or the amount of change ΔIP is determined (ΔIP = IPₒ).

Next, if the step P-20 determines that the amount of change ΔIP is not greater than a specified value b , it is determined as shown in FIG. 5, that the sum value IPₒ is almost at the maximum value, the corrected control value a made in th step P-18 is maintained, and the step P-13 is carried out.

On the other hand, if the amount of change ΔIP is determined to be greater than the specified value b in the step P-20 , and if the amount of change ΔIP is determined to be greater than 0 in the step P-21 , the step P-18 is carried out. However, if the amount of change ΔIP is determined to be 0, A is made -1 in the step P-22 and the step P-18 is carried out. If the amount of change ΔIP is determined to be 0 in the step P-21 , A is made -1 in the step P-22 and the step P-18 is carried out. In this case, the control value a is decreased by a small amount Δa and the reduced value a is used as a corrected control value a , and the step P-13 is carried out.

Through the above steps P-18 to P-22 , the sum value IPₒ is controlled to become almost the maximum value, or controlled to take a greater possible value.

Thus, by the sum value IPₒ of the pressure value P of the exhaust gas 62 , the average pressure value P in the crank angle range extending before and after the specified crank angle is detected, the pulsation state of the exhaust gas 62 is detected more accurately, the sum value IPₒ is increased, the mean effective pressure Pₘ which can be calculated from the sum value IPₒ is increased, output state of the engine 23 is controlled more effectively, and the reflected waves are utilized more effectively.

In FIG. 1, the upstream side sensor 64 is distant from the exhaust port 54 in the longitudinal direction of the exhaust passage 54 . The temperature of the exhaust gas 62 changes. The arrival time of the pressure of the exhaust gas 62 detected by the upstream side sensor 64 as the reflected waves at the exhaust port 54a is calculated by the controller 68 into which the signals detected with the exhaust gas temperature sensor 74 and by the above-mentioned distance are input.

Furthermore, the upstream side sensor 64 and the downstream side sensor (65) are apart from each other in the longitudinal direction of the exhaust passages 53, 54 . Velocity of the reflected waves is calculated by the controller 68 using the detected signals from the two sensors 64, 65 . The arrival time of the pressure of the exhaust gas 62 detected by the upstream side sensor 64 as the reflected waves at the exhaust port 54a is calculated by the controller 68 into which the values detected by the upstream side sensor 64 and the downstream side sensor 65 are input.

The pressure values of the reflected waves which are deemed to have arrived at the exhaust port 54a as described above are summed up as the IPₒ .

The output adjustment device described above in reference to the drawings may be a fuel supply adjustment device which makes the fuel feed rate to the engine 23 variable, or a throttle opening adjustment device, or a variable harmonic length device which makes exhaust pipe length variable, or their combinations. Either of the upstream side sensor 65 and the exhaust temperature sensor 74 may be omitted.

## Claims

1. An internal combustion engine comprising at least one cylinder slidingly receiving a reciprocable piston and having an intake passage opening into said cylinder via an intake port, and an exhaust passage opening into said cylinder via an exhaust port, an engine control means receiving signals from an operation condition detection device having at least one first exhaust gas pressure sensor associated to the exhaust passage (54) and adapted to detect an exhaust gas pressure therein, **characterized in that** said engine control means (57) is adapted to sum up exhaust gas pressure values detected, at least for a period of time from the time when the intake port or scavenging port (51,52a) respectively, is closed to the time when the exhaust port (54a) is closed.

2. An internal combustion engine according to claim 1, **characterized in that** said first exhaust gas pressure sensor (64) is located close to said exhaust port (54a).

3. An internal combustion engine according to claim 1 or 2, **characterized by** a second pressure sensor (65) within said exhaust passage (54) downstream of said first pressure sensor (64).

4. An internal combustion engine according to at least one of claims 1 to 3, **characterized by** an exhaust temperature sensor (74) within said exhaust passage (54) downstream of said first pressure sensor (64).

5. An internal combustion engine according to at least one of claims 1 to 4, **characterized in that** an engine output adjustment means (67) is provided being feedback controlled by a control means (68) both being part of said engine control means (57).

6. An internal combustion engine according to claim 5, **characterized in that** said engine output adjustment means is an ignition timing changing means (67), a fuel supply adjustment device, a throttle opening adjustment device or a variable harmonic length device adapted for changing the exhaust pipe length.

7. An internal combustion engine according to at least one of claims 1 to 6, **characterized in that** a spark plug (49) is connected to an electronic ignition circuit (56) in turn connected to and controlled by said engine control means (57).

8. An internal combustion engine according to at least one of claims 1 to 7, **characterized in that** a crank angle detection sensor (58) is provided connected to said engine control means (57).

9. An internal combustion engine according to claim 8, **characterized in that** said engine controller (57) is adapted to initiate an ignition via said spark plug (49) at a desired crank angle or a desired ignition timing, in particular immediately before the top dead center of said piston (45).

10. An internal combustion engine according to at least one of claims 1 to 9, **characterized by** an engine speed sensor (70) for detecting the speed (N) or the number of revolutions per unit time of a crankshaft of said engine (23).

11. An internal combustion engine according to at least one of claims 1 to 10 **characterized in that** said engine control means (57) is adapted to determine a control value by means of detected operation values in conjunction with stored values.

12. An internal combustion engine according to at least one of claims 3 to 11, **characterized in that** said engine control means (57) is adapted to calculate the velocity of reflected waves of exhaust gas (62) by using detected signals of said first and second pressure sensors (64, 65).

13. An internal combustion engine according to claim 12, **characterized in that** said engine controller (57) is adapted to sum up detected pressure values of said reflected waves.

14. Method of controlling an internal combustion engine comprising at least one cylinder slidingly receiving a reciprocable piston and having an intake passage opening into said cylinder via an intake port and an exhaust passage opening into said cylinder via an exhaust port, an engine control means connected with an operation condition detection device having at least one first exhaust gas pressure sensor, comprising the steps of detecting an exhaust gas pressure, processing the detected exhaust gas pressure values and outputting a control signal for controlling said engine, **characterized in that** said detected exhaust gas pressure values are summed up at least for a time period from the time when the intake port or scavenging port (51;52a) respectively, is closed to the time when the exhaust port (54a) is closed.

15. Method according to claim 14, **characterized in that** said first exhaust gas pressure sensor (64) is located close to said exhaust port (54a).

16. Method according to claim 15, **characterized in that** another exhaust gas pressure value is detected within said exhaust passage (54) by a second exhaust gas pressure sensor (65) located downstream of said first exhaust gas pressure sensor (64).

17. Method according to at least one of the claims 14 to 16, **characterized in that** within said exhaust passage (54) an exhaust gas temperature is detected by an exhaust temperature sensor (74) located downstream of said first exhaust gas pressure sensor (64).

18. Method according to at least one of the claims 14 to 17, **characterized in that** a control means (68) which is a part of said engine control means (57) performs feedback control of an engine output adjustment means (67) so that the summed up values of said exhaust gas pressures calculated by said control means (68) becomes as large as possible.

19. Method according to claim 18, **characterized in that** said control means (68) controls the engine output by controlling an ignition timing changing means (67), a fuel supply adjustment device, a throttle opening adjustment device or a variable harmonic length device which changes the length of an exhaust pipe (33).

20. Method according to claim 19, **characterized in that** said ignition timing changing means (67) is controlled by measuring a throttle opening and an engine speed (N), comparing said measure values with predetermined values, and when said comparison is negative determining a control value from that throttle opening and engine speed (N), when said comparison is positive calculating a sum value (IPo) from said pressure values (P) and determining a control value from said throttle opening and engine speed, and then controlling said ignition timing changing means (67).

21. Method according to claim 20, **characterized in that** said comparison is carried out as follows, checking whether the rate of variation in throttle opening is below a specified value, if no determining said control value, if yes checking whether said throttle opening is at middle opening or more, if no determining said control value, if yes checking whether said engine speed is at middle speed or more, if no determining said control value, if yes calculating said sum value (IPo) of said pressure values (P).

## Patentansprüche

1. Eine Brennkraftmaschine mit zumindest einem Zylinder, der gleitbar einen hin- und herbewegbaren Kolben aufnimmt und der einen Einlaßkanal hat, der sich in diesen Zylinder über eine Einlaßöffnung öffnet, und einen Außlaßkanal hat, der sich in diesen Zylinder über eine Auslaßöffnung öffnet, einer Motorsteuereinrichtung, die Signale von einer Betriebsbedingungs-Erfassungsvorrichtung aufnimmt, die zumindest einen ersten Abgasdrucksensor, verbunden mit dem Abgaskanal (54) aufweist und vorgesehen, um einen Abgasdruck darinnen zu erfassen, **dadurch gekennzeichnet, daß** die Motorsteuereinrichtung (57) vorgesehen ist, die erfaßten Abgasdruckwerte aufzusummieren, zumindest eine Zeitspanne von dem Zeitpunkt, wenn die Einlaßöffnung oder Spülöffnung (51, 52a) jeweils geschlossen ist, bis zu dem Zeitpunkt, wenn die Abgasöffnung (54a) geschlossen ist.

2. Eine Brennkraftmaschine nach Anspruch 1, **dadurch gekennzeichnet, daß** der erste Abgasdrucksensor (64) nahe zu der Abgasöffnung (54a) angeordnet ist.

3. Eine Brennkraftmaschine nach Anspruch 1 oder 2, **gekennzeichnet durch** einen zweiten Drucksensor (65) innerhalb des Abgaskanals (54), stromab des ersten Drucksensors (64).

4. Eine Brennkraftmaschine nach zumindest einem der Ansprüche 1 bis 3, **gekennzeichnet**, durch einen Abgastemperatursensor (74) innerhalb des Abgaskanales (54) stromab des ersten Drucksensors (64) ist.

5. Eine Brennkraftmaschine nach zumindest einem der Ansprüche 1 bis 4, **dadurch gekennzeichnet, daß** ein Motorleistung-Einstelleinrichtung (67) vorgesehen ist, die durch eine Steuereinrichtung (68) rückkopplungsgesteuert ist, wobei beide Teil der Motorsteuereinrichtung (57) sind.

6. Eine Brennkraftmaschine nach Anspruch 5, **dadurch gekennzeichnet, daß** die Motorleistungs- Einstelleinrichtung (67) eine Zündzeitpunkt-Veränderungseinrichtung (67), eine Kraftstoffzuführ-Einstellvorrichtung, eine Drosselöffnung-Einstellvorrichtung oder ein variable harmonische Längenvorrichtung ist, vorgesehen zum Verändern der Abgasrohrlänge.

7. Eine Brennkraftmaschine nach zumindest einem der Ansprüche 1 bis 6, **dadurch gekennzeichnet, daß** eine Zündkerze (49) mit einem elektronischen Zündschaltkreis (56) verbunden ist, der seinerseits verbunden ist mit und gesteuert wird durch die Motorsteuereinrichtung (57).

8. Eine Brennkraftmaschine nach zumindest einem der Ansprüche 1 bis 7, **dadurch gekennzeichnet, daß** ein Kurbelwinkel-Erfassungssensor (58) vorgesehen ist, verbunden mit der Motorsteuereinrichtung (57).

9. Eine Brennkraftmaschine nach Anspruch 8, **dadurch gekennzeichnet, daß** die Motorsteuereinrichtung (57) vorgesehen ist, um eine Zündung über die Zündkerze (49) bei einem gewünschten Kurbelwinkel oder einem gewünschten Zündzeitpunkt zu initiieren, insbesondere unmittelbar vor dem oberen Totpunkt des Kolbens (45).

10. Eine Brennkraftmaschine nach zumindest einem der Ansprüche 1 bis 9, **gekennzeichnet durch** einen Motordrehzahlsensor (70) zum Erfassen der Drehzahl (N) oder der Anzahl der Umdrehungen pro Minute einer Kurbelwelle des Motors (23).

11. Eine Brennkraftmaschine nach zumindest einem der Ansprüche 1 bis 10, **dadurch gekennzeichnet, daß** die Motorsteuereinrichtung (57) vorgesehen ist, um einen Steuerwert durch erfaßte Betriebswerte in Verbindung mit gespeicherten Werten zu bestimmen.

12. Eine Brennkraftmaschine nach zumindest einem der Ansprüche 3 bis 11, **dadurch gekennzeichnet, daß** die Motorsteuereinrichtung (57) vorgesehen ist, um die Geschwindigkeit der reflektierten Wellen des Abgases (62) durch Verwendung erfaßter Signale des ersten und zweiten Drucksensors (64,65) zu berechnen.

13. Eine Brennkraftmaschine nach Anspruch 12, **dadurch gekennzeichnet, daß** die Motorsteuereinrichtung (57) vorgesehen ist, die erfaßten Druckwerte der reflektierten Wellen aufzusummieren.

14. Verfahren der Steuerung einer Brennkraftmaschine, mit zumindest einem Zylinder, der gleitbar einen hin- und herbewegten Kolben aufnimmt und einen Einlaßkanal, der sich in den Zylinder über eine Einlaßöffnung öffnet und einen Auslaßkanal, der sich in den Zylinder über eine Auslaßöffnung öffnet, einer Motorsteuereinrichtung, verbunden mit einer Betriebszustand-Erfassungsvorrichtung, die zumindest einen ersten Abgasdrucksensor hat, mit den Schritten der Erfassung eines Abgasdruckes, Verarbeiten der erfaßten Abgasdruckwerte und Ausgeben eines Steuersignales zur Steuerung des Motors, **dadurch gekennzeichnet, daß** die erfaßten Abgasdruckwerte zumindest für eine Zeitdauer von dem Zeitpunkt, wenn jeweils die Einlaßöffnung oder Spülöffnung (51, 52a) geschlossen ist, bis zu dem Zeitpunkt, wenn die Abgasöffnung (54a) geschlossen ist.

15. Verfahren nach Anspruch 14, **dadurch gekennzeichnet, daß** der erste Abgasdrucksensor (64) nahe zu der Auspufföffnung angeordnet ist.

16. Verfahren nach Anspruch 15, **dadurch gekennzeichnet, daß** ein weiterer Abgasdruckwert innerhalb des Abgaskanales (54) durch einen zweiten Abgasdrucksensor (65) erfaßt wird, der stromabwärts des ersten Abgasdrucksensors (64) angeordnet ist.

17. Verfahren nach zumindest einem der Ansprüche 14 bis 16, **dadurch gekennzeichnet, daß** innerhalb des Abgaskanales (54) eine Abgastemperatur durch einen zweiten Abgastemperatursensor (65), angeordnet stromabwärts des ersten Abgasdrucksensors (64) erfaßt wird.

18. Verfahren nach zumindest einem der Ansprüche 14 bis 17, **dadurch gekennzeichnet, daß** eine Steuereinrichtung (68), die Teil der Motorsteuereinrichtung (57) ist, eine Rückkopplungssteuerung der Motorausgangsleistung-Erfassungseinrichtung (67) vornimmt, so daß die aufsummierten Werte der Abgasdrücke, berechnet durch die Steuereinrichtung (68), so groß wie möglich wird.

19. Verfahren nach Anspruch 18, **dadurch gekennzeichnet, daß** die Steuereinrichtung (68) die Motorleistung durch Steuerung einer Zündzeitpunkt-Veränderungseinrichtung (67) steuert, einer Kraftstoffzufuhr-Einstellvorrichtung, einer Drosselöffnungs-Einstellvorrichtung oder einer variablen harmonischen Längenvorrichtung, die die Länge des Abgasrohres (33) verändert.

20. Verfahren nach Anspruch 19, **dadurch gekennzeichnet, daß** die Zündzeitpunkt-Änderungseinrichtung (67) durch Messen einer Drosselöffnung und einer Motordrehzahl (N) gesteuert wird, die Messwerte mit vorgegebenen Werten vergleichend, und wenn der Vergleich negativ ist, einen Steuerwert aus der Drosselöffnung und der Motordrehzahl (N) bestimmt, und die dann, wenn der Vergleich positiv ist, einen Summenwert (IP₀) von den Druckwerten (P) berechnet und die einen Steuerwert von der Drosselöffnung und Motordrehzahl bestimmt, und danach die Zündzeitpunkt-Änderungseinrichtung (67) steuert.

21. Verfahren nach Anspruch 20, **dadurch gekennzeichnet, daß** der Vergleich wie folgt ausgeführt wird, Prüfen, ob die Rate der Veränderung in der Drosselöffnung unter einem bestimmten Wert ist und, falls nein, Bestimmung des Steuerwertes, falls ja, Prüfen ob die Drosselöffnung auf mittlerer Öffnung oder mehr ist, falls nein, Bestimmung des Steuerwertes, falls ja, Prüfen, ob die Motordrehzahl auf einer mittleren Drehzahl oder mehr ist, falls nein, Bestimmung des Steuerwertes, falls ja, Berechnung des Summenwertes (IP₀) der Druckwerte (P).

## Revendications

1. Moteur à combustion interne comprenant au moins un cylindre recevant en coulissement un piston à mouvement alternatif et comportant un passage d'admission s'ouvrant à l'intérieur dudit cylindre par un orifice d'admission, et un passage d'échappement s'ouvrant à l'intérieur dudit cylindre par un orifice d'échappement, des moyens de commande de moteur recevant des signaux en provenance d'un dispositif de détection de conditions de fonctionnement comportant au moins un premier détecteur de pression de gaz d'échappement associé au passage d'échappement (54) et adapté pour détecter une pression de gaz d'échappement dans celui-ci,
caractérisé en ce que lesdits moyens de commande de moteur (57) sont adaptés pour totaliser des valeurs de pression de gaz d'échappement détectées, au moins pendant une période de temps à partir du moment où, l'orifice d'admission ou l'orifice de balayage (51, 52a) respectivement, est fermé jusqu'au moment où l'orifice d'échappement (54a) est fermé.

2. Moteur à combustion interne selon la revendication 1, caractérisé en ce que ledit premier détecteur de pression de gaz d'échappement (64) est positionné à proximité dudit orifice d'échappement (54a).

3. Moteur à combustion interne selon les revendications 1 ou 2,
caractérisé par un second détecteur de pression (65) situé dans ledit passage d'échappement (54) en aval dudit premier détecteur de pression (64).

4. Moteur à combustion interne selon au moins l'une des revendications 1 à 3, caractérisé par un détecteur de température d'échappement (74) situé à l'intérieur dudit passage d'échappement (54) en aval dudit premier détecteur de pression (64).

5. Moteur à combustion interne selon au moins l'une des revendications 1 à 4, caractérisé en ce que des moyens de réglage de sortie de moteur (67) sont fournis et sont commandés par asservissement par des moyens de commande (68), tous deux faisant partie desdits moyens de commande de moteur (57).

6. Moteur à combustion interne selon la revendication 5, caractérisé en ce que lesdits moyens de réglage de sortie de moteur sont des moyens de modification du calage de l'allumage (67), un dispositif de réglage de l'alimentation en carburant, un dispositif de réglage de l'ouverture du papillon des gaz ou un dispositif à longueur harmonique variable adapté pour modifier la longueur de la tubulure d'échappement.

7. Moteur à combustion interne selon au moins l'une des revendications 1 à 6, caractérisé en ce qu'une bougie d'allumage (49) est reliée à un circuit d'allumage électronique (56), lui-même étant relié aux dits moyens de commande de moteur (57) et commandés par ceux-ci.

8. Moteur à combustion interne selon au moins l'une des revendications 1 à 7, caractérisé en ce qu'il comporte un détecteur d'angle de calage de manivelle (58) relié aux dits moyens de commande de moteur (57).

9. Moteur à combustion interne selon la revendication 8, caractérisé en ce que ladite unité de commande de moteur (57) est adaptée pour commencer un allumage par l'intermédiaire de ladite bougie d'allumage (49) à un angle de calage de manivelle souhaité ou à un calage de l'allumage souhaité, en particulier immédiatement avant le point mort haut dudit piston (45).

10. Moteur à combustion interne selon au moins l'une des revendications 1 à 9, caractérisé par un détecteur de vitesse de rotation du moteur (70) destiné à détecter la vitesse (N) ou le nombre de tours par unité de temps du vilebrequin dudit moteur (23).

11. Moteur à combustion interne selon au moins l'une des revendications 1 à 10, caractérisé en ce que lesdits moyens de commande de moteur (57) sont adaptés pour déterminer une valeur de commande au moyen de valeurs de fonctionnement détectées en liaison avec des valeurs stockées.

12. Moteur à combustion interne selon au moins l'une des revendications 3 à 11, caractérisé en ce que lesdits moyens de commande de moteur (57) sont adaptés pour calculer la vitesse des ondes réfléchies des gaz d'échappement (62) en utilisant des signaux détectés par lesdits premier et second détecteurs de pression (64, 65).

13. Moteur à combustion interne selon la revendication 12, caractérisé en ce que ladite unité de commande de moteur (57) est adaptée pour totaliser des valeurs de pression détectées desdites ondes réfléchies.

14. Procédé de commande d'un moteur à combustion interne comprenant au moins un cylindre recevant en coulissement un piston à mouvement alternatif et comportant un passage d'admission s'ouvrant à l'intérieur dudit cylindre par un orifice d'admission, et un passage d'échappement s'ouvrant à l'intérieur dudit cylindre par un orifice d'échappement, des moyens de commande de moteur connectés à un dispositif de détection de conditions de fonctionnement comportant au moins un premier détecteur de pression de gaz d'échappement, comprenant les étapes de détection d'une pression de gaz d'échappement, de traitement des valeurs de pression de gaz d'échappement détectées et de sortie d'un signal de commande destiné à commander ledit moteur,
caractérisé en ce que lesdites valeurs de pression de gaz d'échappement détectées sont totalisées au moins pendant une période de temps à partir du moment où l'orifice d'admission ou l'orifice de balayage (51, 52a), respectivement, est fermé jusqu'au moment où l'orifice d'échappement (54a) est fermé.

15. Procédé selon la revendication 14, caractérisé en ce que ledit premier détecteur de pression de gaz d'échappement (64) est positionné à proximité dudit orifice d'échappement (54a).

16. Procédé selon la revendication 15, caractérisé en ce qu'une autre valeur de pression de gaz d'échappement est détectée à l'intérieur dudit passage d'échappement (54) par un second détecteur de pression de gaz d'échappement (65) situé en aval dudit premier détecteur de pression de gaz d'échappement (64).

17. Procédé selon au moins l'une des revendications 14 à 16,
caractérisé en ce qu'une température de gaz d'échappement est détectée à l'intérieur dudit passage d'échappement (54) par un détecteur de température d'échappement (74) situé en aval dudit premier détecteur de pression de gaz d'échappement (64).

18. Procédé selon au moins l'une des revendications 14 à 17,
caractérisé en ce que des moyens de commande (68) qui font partie desdits moyens de commande de moteur (57) exécutent une commande asservie des moyens de réglage de sortie de moteur (67), de sorte que les valeurs totalisées desdites pressions de gaz d'échappement calculées par lesdits moyens de commande (68) deviennent aussi grandes que possible.

19. Procédé selon la revendication 18, caractérisé en ce que lesdits moyens de commande (68) commandent la sortie du moteur en commandant des moyens de modification de calage de l'allumage (67), un dispositif de réglage de l'alimentation en carburant, un dispositif de réglage de l'ouverture du papillon des gaz ou un dispositif à longueur harmonique variable qui modifie la longueur d'une tubulure d'échappement (33).

20. Procédé selon la revendication 19, caractérisé en ce que lesdits moyens de modification de calage de l'allumage (67) sont commandés par mesure d'une ouverture du papillon des gaz et d'une vitesse du moteur (N), par comparaison desdites valeurs de mesure avec des valeurs prédéterminées, et lorsque ladite comparaison est négative, par détermination d'une valeur de commande à partir de cette ouverture de papillon des gaz et de cette vitesse du moteur (N), lorsque la comparaison est positive, par calcul d'une valeur de total (IPo) à partir desdites valeurs de pression (P) et par détermination d'une valeur de commande à partir de ladite ouverture de papillon des gaz et de ladite vitesse de rotation du moteur, et ensuite par commande desdits moyens de modification de calage de l'allumage (67).

21. Procédé selon la revendication 20, caractérisé en ce que ladite comparaison est réalisée comme suit : vérification que le taux de variation de l'ouverture du papillon des gaz est inférieur à une valeur spécifiée, si la réponse est non, détermination de ladite valeur de commande, si la réponse est oui, vérification que ladite ouverture du papillon des gaz est à mi-course ou davantage, si la réponse est non, détermination de ladite valeur de commande, si la réponse est oui, vérification que ladite vitesse de rotation du moteur est à mi-plage ou supérieure, si la réponse est non, détermination de ladite valeur de commande, si la réponse est oui, calcul de ladite valeur de total (IPo) desdites valeurs de pression (P).
